# EUROPEAN PATENT APPLICATION

(11) **EP 4 435 320 A1**
(43) Date of publication of application: **25.09.2024**
(21) Application number: 22894571.3
(22) Date of filing: 24.10.2022
(51) Int. Cl.: F21V 8/00, F21V 5/04, F21K 9/20

(54) **LIGHT GUIDE ELEMENT AND LAMP**

(30) Priority: 16.11.2021 CN 202122798468 U; 16.11.2021 CN 202111352911
(71) Applicant: Suzhou Opple Lighting Co., Ltd., Suzhou, Jiangsu 215211 (CN); Opple Lighting Co., Ltd., Shanghai 201201 (CN)
(72) Inventor: LI, Yang, Suzhou, Jiangsu 215211 (CN); GAO, Minghao, Suzhou, Jiangsu 215211 (CN); LI, Huajian, Suzhou, Jiangsu 215211 (CN); LIU, Haisheng, Suzhou, Jiangsu 215211 (CN); LIU, Chaobo, Suzhou, Jiangsu 215211 (CN)
(74) Representative: dompatent von Kreisler Selting Werner - Partnerschaft von Patent- und Rechtsanwälten mbB
(86) International application number: PCT/CN2022/126971
(87) International publication number: WO 2023/088034

(57) **Abstract**

The present application provides a light guide element and a lamp, the light guide element is configured to guide light emitted by a light source, the light guide element is provided with a light incident portion and a light guide portion, the light source is placed below the light incident portion, and a side of the light incident portion close to the light source is recessed to form a light incident surface, and the light incident surface is a curved surface; a light exiting surface is formed on the light guide portion, and the light guide portion is arranged beside the light incident portion and connected to the light incident surface, so that the light emitted by the light source enters the light guide portion after passing through the light incident surface and propagates in the light guide portion, and the light in the light guide portion is emitted through the light exiting surface in a propagation path of the light. In the present application, by setting the light source in a direct-lit arrangement and in cooperation with the light incident portion on the light guide element, the light guide element can achieve side-emission of light, which not only realizes an ultra-thin shape of the lamp, but also increases the creepage distance of the light source, thereby improving the luminous efficiency of the lamp and the natural softness of the light.

## Description

The application claims priority to the Chinese patent application No. 202111352911.7, filed on November 16, 2021, with the title "LIGHT GUIDE ELEMENT AND LAMP", the entire disclosure of which is incorporated herein by reference as part of the present application.

### TECHNICAL FIELD

The present application relates to a light guide element and a lamp, and belongs to the technical field of lamps.

### BACKGROUND

At present, lamps, such as downlights, ceiling lamps, etc., should not only be ultra-thin, but also ensure the light exiting efficiency. Generally, ultra-thin lamps are achieved by densely arranging a large number of LEDs, or ultra-thin lamps are achieved by side-mounting LEDs in cooperation with a light guide plate. If the first scheme is adopted, the number of LEDs in the lamp is large, the cost is high, and a large number of LEDs will bring potential safety hazards on the circuit. If the second scheme is adopted, the thickness of the light guide plate and the width of the light source plate are usually small, which leads to a short creepage distance of the LEDs, and there is a potential safety hazard; moreover, the light guide plate is easy to damage the LEDs during assembly, resulting in a high defective assembly rate of the entire lamp.

In view of this, it is indeed necessary to propose a new light guide element and a lamp adopting the light guide element to solve the above problems.

### SUMMARY

The purpose of the present application is to provide a light guide element, so as to at least solve one of the problems of small creepage distance of LEDs, high defective assembly rate of the entire lamp and low light exiting rate of the entire lamp.

In order to achieve the above purpose, the present application provides a light guide element which is configured to guide light emitted by a light source, the light guide element is provided with a light incident portion and a light guide portion, the light source is placed below the light incident portion, and a side of the light incident portion close to the light source is recessed to form a light incident surface, and the light incident surface is a curved surface; a light exiting surface is formed on the light guide portion, and the light guide portion is arranged beside the light incident portion and connected to the light incident surface, so that the light emitted by the light source enters the light guide portion after passing through the light incident surface and propagates in the light guide portion, and the light in the light guide portion is emitted through the light exiting surface in a propagation path of the light.

As a further improvement of the present application, the light incident surface comprises a first incident surface and a second incident surface, the light guide portion comprises a first light guide portion and a second light guide portion located at two sides of the light incident portion, the first light guide portion is connected to the first incident surface, the second light guide portion is connected to the second incident surface, and a thickness of the first light guide portion and/or a thickness of the second light guide portion gradually decreases along a direction away from the light incident portion.

As a further improvement of the present application, a maximum thickness of a part of the second light guide portion close to the light incident portion is less than a maximum thickness of a part of the first light guide portion close to the light incident portion; the light incident portion is between the first light guide portion and the second light guide portion, and a thickness of the light incident portion is smaller in a middle region thereof and larger on both edge regions thereof.

As a further improvement of the present application, the thickness of the first light guide portion and the thickness of the second light guide portion are both in a range of 0.6mm-4mm.

As a further improvement of the present application, the first light guide portion comprises a first light guide surface close to the light source and a second light guide surface opposite to the first light guide surface, the second light guide surface is parallel to a horizontal plane, and the first light guide surface gradually inclines upward from the first incident surface along a direction away from the first incident surface.

As a further improvement of the present application, the light guide element is arranged in a ring shape, the light incident portion surrounds the second light guide portion, the first light guide portion surrounds the light incident portion, and a light destroying structure is arranged on the light exiting surface of the first light guide portion to destroy total reflection of light in the first light guide portion.

As a further improvement of the present application, the light destroying structure comprises a stepped microstructure.

As a further improvement of the present application, a curved surface of the first incident surface and/or a curved surface of the second incident surface both protrude towards the light source.

The purpose of the present application is to further provide a lamp, so as to achieve better application of the above-mentioned light guide element.

In order to achieve the above purpose, the present application provides a lamp, the lamp comprises a lamp body, a light source assembly, a light guide element and a mask which are assembled and matched with each other, a lamp cavity is formed in the lamp body, and the light source assembly is fixed in the lamp cavity, the light guide element is the above-mentioned light guide element.

As a further improvement of the present application, a positioning portion protrudes from an edge of the light guide element, a matching portion matched with the positioning portion is arranged on an inner side wall of the lamp body; and the light guide element is fixed in the lamp cavity through mutual matching of the positioning portion and the matching portion.

As a further improvement of the present application, the positioning portion is a buckle protruding outward from the edge of the light guide element, the matching portion is a clamping slot recessed on the inner side wall of the lamp body, the buckle is accommodated in the clamping slot to fix the light guide element in the lamp body.

As a further improvement of the present application, the light source assembly comprises a light source plate and lamp beads fixed on the light source plate, a surface of the light source plate close to the light guide element is sprayed with ink, and the lamp beads are uniformly distributed on the light source plate and located at a central position below the light incident portion of the light guide element.

As a further improvement of the present application, the lamp is a downlight; the lamp body, the light source assembly, the light guide element and the mask are all arranged in a circular shape, and the mask covers an outer side of the light guide element and is fixedly connected to the lamp body to seal the lamp cavity.

The present application has the beneficial effects that: the light incident surface of the light guide element of the present application, which is formed by inwardly recessing and is arranged as a curved surface, not only effectively increases the creepage distance of the light source, but also effectively improves the light exiting rate of the light source; according to the lamp of the present application, the direct-lit arrangement of the light source assembly and the light guide element, in cooperation with the inwardly recessed light incident portion on the light guide element, causes the light guide element to achieve side-emission of light, thereby not only realizing the ultra-thin shape of the lamp, but also improving the light exiting rate of the entire lamp and the natural softness of the light.

### BRIEF DESCRIPTION OF DRAWINGS

FIG. 1 is a perspective view of a lamp in accordance with a preferred embodiment of the present application;
FIG. 2 is an exploded view of FIG. 1;
FIG. 3 is an exploded view of the light guide element and the lamp body in FIG. 2;
FIG. 4 is a schematic structural diagram of the LED fixed on the light source plate in FIG. 2;
FIG. 5 is a schematic structural diagram of the light guide element in FIG. 2.
FIG. 6 is a schematic structural diagram of the light guide element shown in FIG. 5 observed from another viewing angle.
FIG. 7 is a cross-sectional view of the light source assembly and the light guide element in FIG. 2 when matching with each other.
FIG. 8 is a light direction diagram of FIG. 7.

### DETAILED DESCRIPTION

In order to make the purposes, technical solutions and advantages of the present application more clear, the present application will be described in detail below in conjunction with the accompanying drawings and specific embodiments.

In the prior art, in order to achieve ultra-thin lamps, a common implementation manner of achieving ultra-thin lamps is by densely arranging a large number of LEDs or side-mounting LEDs in cooperation with a light guide plate. The above scheme may have potential safety hazards when assembling the lamps, or has high assembly position requirements for the light guide element and the light source assembly in the lamps, which increases the cumbersome procedures during assembly. In contrast, the present application provides a light guide element 40, the light guide element 40 is configured to guide light emitted by a light source, which can not only realize the ultra-thin design of the lamp, but also has high safety during assembly and simple installation steps.

Specifically, the light guide element 40 is provided with a light incident portion 41 and a light guide portion 42, the light source is placed below the light incident portion 41, one side of the light incident portion 41 close to the light source is recessed to form a light incident surface A and a light incident cavity B, and the light source is specifically accommodated in the light incident cavity B, thus ensuring that the light emitted by the light source can reach the light incident surface A quickly and smoothly. The light guide portions 42 are respectively arranged at two sides of the light incident portion 41 and connected to the light incident surface A, so that the light emitted by the light source enters the light guide portion 42 after passing through the light incident surface A, propagates in the light guide portion 42, and finally emits through a light exiting surface. And the creepage distance is increased. It should be noted that in the present application, the light guide element 40 is arranged in a circular shape, the light incident portion 41 is formed in a ring shape on the light guide element 40, and the light guide portion 42 is arranged on the inner side and the outer side of the light incident portion 41. That is, the light incident portion 41 divides the light guide portion 42 into two parts, so the light guide portions 42 are arranged at two sides of the light incident portion 41 from the cross-sectional view of the light guide element 40. Of course, in other embodiments, the light guide element 40 may also be arranged in a flat shape or a strip shape, as long as the positional relationship of "the light incident portion is located between the two light guide portions" can be satisfied, and there is no limitation to this here.

In addition, in order to achieve better application of the light guide element 40 and in order to realize the ultra-thin lamp and reduce the defective rate of assembling the lamp, the present application further provides a lamp, and the lamp includes a lamp body 10, a light source assembly 20, the light guide element 40 and a mask 50 which are assembled with each other. For the sake of clarity, the following description will take that the lamp is a downlight 100 as an example. Of course, the light guide element 40 can also be applied to other lamps (such as ceiling lamps), so there is no excessive limitation to this here.

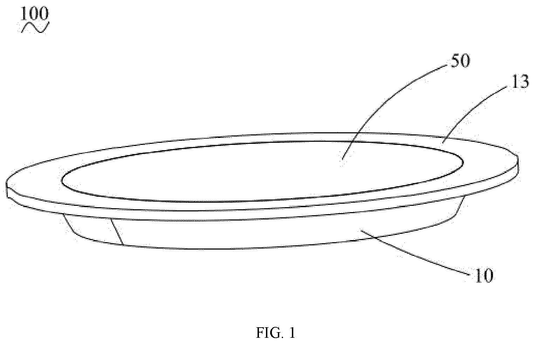

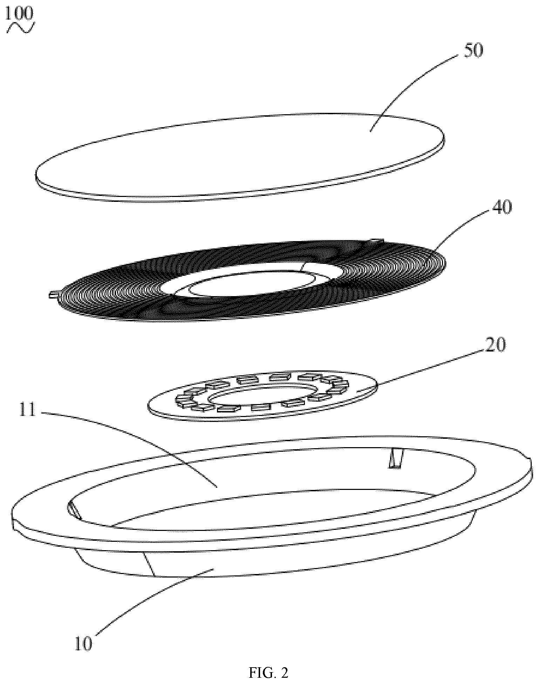

As shown in FIG. 1 and FIG. 2, the present application discloses a downlight 100, the downlight 100 includes a lamp body 10, a light source assembly 20, a light guide element 40 and a mask 50 that are sequentially assembled with each other. The lamp body 10, the light source assembly 20, the light guide element 40 and the mask 50 of the downlight 100 are all arranged in a circular shape; the bottom of the lamp body 10 is recessed inward to form a lamp cavity 11, so that the entire lamp body 10 is arranged in a bowl shape; the light source assembly 20 is fixed at the bottom of the lamp cavity 11, the light guide element 40 is assembled and fixed with the lamp body 10, so as to limit the light source assembly 20 in the lamp cavity 11; and the mask 50 covers the outer side of the light guide element 40 and is fixedly connected to the lamp body 10 to seal the lamp cavity 11.

With reference to FIG. 1, FIG. 2 and FIG. 3, specifically, in the present application, a positioning portion 46 protrudes from the edge of the light guide element 40, and a matching portion 12 matched with the positioning portion 46 is arranged on the inner side wall of the lamp body 10. Preferably, the positioning portion 46 is a buckle 46 protruding outward from the edge of the light guide element 40, and the matching portion 12 is a clamping slot 12 provided on the inner side wall of the lamp body 10, and the buckle 46 is accommodated in the clamping slot 12 to fix the light guide element 40 in the lamp body 10. Preferably, the clamping slot 12 in the present embodiment is a triangular groove composed of three surfaces, that is, the clamping slot 12 on the lamp body 10 is equivalent to a guide groove of the buckle 46. In this way, when the light guide element 40 is assembled and fixed with the lamp body 10, the buckle 46 of the light guide element 40 can slide into the clamping slot 12 of the lamp body 10, thus the assembly is simple, the positioning is more precise, and the light source assembly 20 will not be damaged. In other words, the light guide element 40 can be fixed in the lamp body 10 through the buckle 46 and the clamping slot 12.

Of course, the positioning portion 46 may also be a clamping slot provided at the edge of the light guide element 40, and in this case, the matching portion 12 is a buckle protruding from the inner side wall of the lamp body 10 correspondingly, which can also achieve assembling and fixing the light guide element 40 with the lamp body 10. Alternatively, the matching portion 12 on the inner side wall of the lamp body 10 may also be other structures, and the positioning portion 46 may also be other structures, as long as the positioning portion 46 and the matching portion 12 can match with each other to achieve the purpose of assembling and fixing the light guide element 40 with the lamp body 10, and there is no excessive limitation here.

In addition, an annular protective edge 13 protrudes from the edge of the lamp body 10, the inner diameter of the protective edge 13 is greater than the outer diameter of the mask 50, and it can be ensured that the outer surface of the mask 50 and the outer surface of the protective edge 13 are on the same horizontal plane when the mask 50 is put into the lamp body 10. Such structural design (that is, the combination of the protective edge 13 and the bowl-shaped lamp body 10) not only accommodates the light source assembly 20, the light guide element 40 and the mask 50 in the lamp body 10 to effectively protect the internal structures of the lamp body 10, but also makes the entire lamp thinner and lighter.

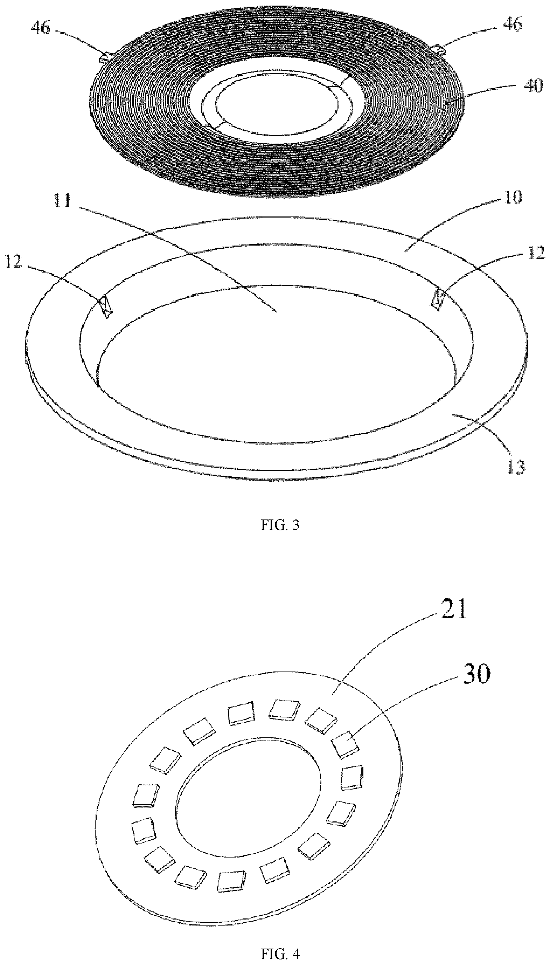

As shown in FIG. 4, the light source assembly 20 includes a light source plate 21 and lamp beads 30 fixed on the light source plate 21, and a surface of the light source plate 21 close to the light guide element 40 is sprayed with ink to improve the reflectivity of the light source plate 21. In the present application, the lamp beads 30 is LEDs, that is, the LEDs 30 is the light source inside the downlight 100. Specifically, LEDs 30 and a cable for powering the LEDs 30 are provided on a side of the light source plate 21 close to the light guide element 40. When assembling, the assembled light source assembly 20 is directly laid flat and fixed in the lamp body 10, and then the light guide element 40 and the mask 50 are sequentially assembled above the light source assembly 20 and fixed in the lamp cavity 11 of the lamp body 10. It should be noted that the light incident portion 41 of the light guide element 40 needs to be positioned above the LEDs 30 when assembling.

The mask 50 is used to homogenize light, preferably, in the present application, the purpose of homogenizing or mixing light is achieved by adding a diffusing agent, and the primary transmittance can reach 60%-70%. The material of the diffusing agent may be at least one selected from the group consisting of PC, PMMA, PP or PS, etc. In this way, compared with the prior art, the direct-lit arrangement of LEDs is in cooperation with the side-emission of light of the light guide element 40, so that the width of the light source plate 21 is not limited by positioning, thereby increasing the creepage distance of the LEDs 30.

Further, in the present application, the light source plate 21 is arranged in an annular shape, a plurality of LED 30 are uniformly distributed in a ring shape and fixed on the light source plate 21, and each LED is located at the central position below the light incident cavity B. Such arrangement can not only save the material of the light source plate 21 and reduce the weight of the entire lamp, but also reduce the number of lamp beads 30 under the condition of ensuring the light exiting rate, thus effectively improving the safety of circuit design.

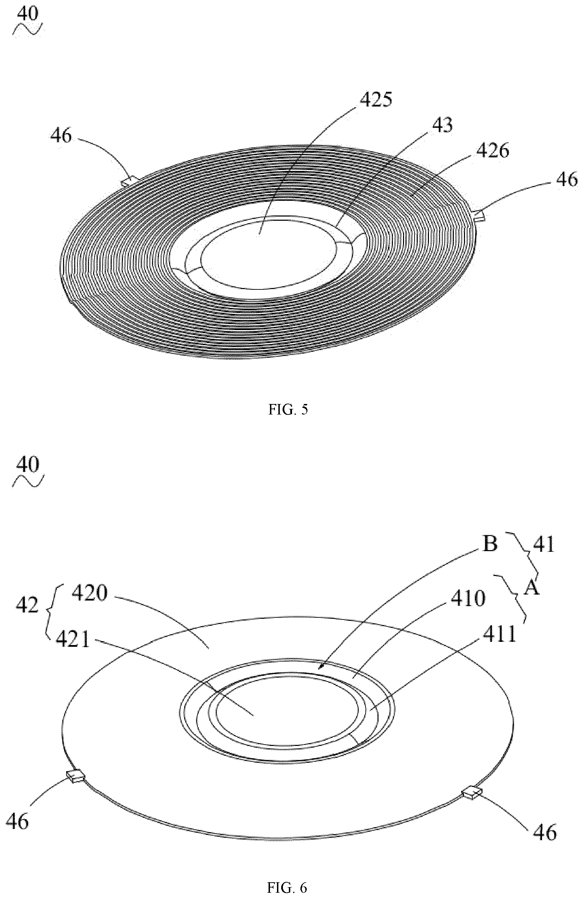

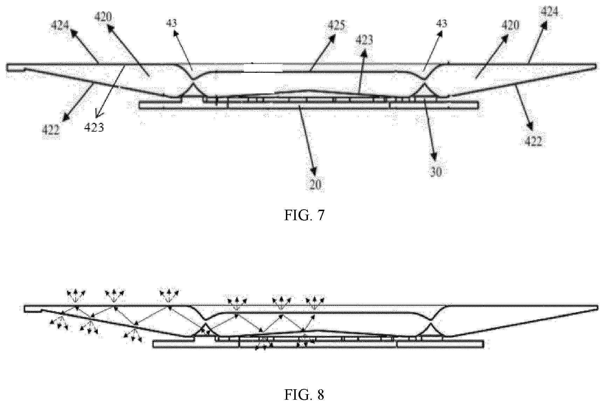

As shown in FIG. 5, FIG. 6 and FIG. 7, the light guide element 40 is made of a transparent optical material, and preferably, the transparent optical material is at least one selected from the group consisting of transparent PC, transparent PMMA or transparent PS, etc. The light guide element 40 includes a light incident portion 41 and a light guide portion 42. The light guide portions 42 are respectively arranged at two sides of the light incident portion 41 and connected to the light incident surface A, so that the light emitted by the LEDs 30 enters the light guide portion 42 after passing through the light incident surface A, and propagates in the light guide portion 42. Specifically, a side of the light incident portion 41 close to the LEDs 30 is recessed upward to form the light incident surface A, that is, the side of the light incident portion 41 close to the light source plate 21 is recessed toward a direction away from the light source plate 21 to form the light incident surface A and the light incident cavity B, and the opening orientation of the light incident cavity B is toward the light source plate 21. The light incident portion 41 is arranged in a ring shape at the central position of the light guide element 40 and is concentric with the entire light guide element 40. The light source assembly 20 is placed under the light guide element 40, and the LEDs 30 fixed on the light source plate 21 is placed under the opening of the light incident cavity B. Such arrangement not only increases the creepage distance of the LEDs 30, but also effectively improves the light exiting rate of the entire lamp.

The incident surface A includes a first incident surface 410 and a second incident surface 411. It can be understood that both the first incident surface 410 and the second incident surface 411 are arranged in a ring shape, and the distance r1 from the first incident surface 410 to the center of the light guide element 40 is greater than the distance r2 from the second incident surface 411 to the center of the light guide element 40. The distance difference between r1 and r2 ranges from 4.5 mm to 5 mm, that is, the diameter of the opening of the light incident cavity B ranges from 4.5 mm to 5 mm. Preferably, the diameter of the opening of the light incident cavity B is 4.5mm, and the LEDs 30 is placed at the central position below the opening of the light incident cavity B.

The light incident portion 41 divides the light guide portion 42 on the light guide element 40 into a first light guide portion 420 and a second light guide portion 421. The first light guide portion 420 is connected to the first incident surface 410, the second light guide portion 421 is connected to the second incident surface 411, and the thickness of the first light guide portion 420 and/or the second light guide portion 421 gradually decreases along the direction away from the light incident portion 41. That is, the second light guide portion 421 is located in the center of the entire light guide element 40 and is close to the second incident surface 411, the light incident portion 41 surrounds the second light guide portion 421, the first light guide portion 420 surrounds the light incident portion 41 and is close to the first incident surface 410, and the first light guide portion 420, the light incident portion 41 and the second light guide portion 421 are all arranged concentrically. In the present application, the thickness of the light guide element 40 ranges from 0.6 mm to 4 mm, that is, the thickness of the thickest region of the light guide element 40 is 4mm, the thickness of the thinnest region of the light guide element 40 is 0.6mm, and the thickness of the first light guide portion 420 becomes thinner uniformly as it extends away from the first incident surface 410.

The first light guide portion 420 includes a first light guide surface 422 close to the LEDs 30 and a second light guide surface 423 opposite to the first light guide surface 422, the second light guide surface 423 is parallel to the horizontal plane, and the first light guide surface 422 gradually inclines upward from the first incident surface 410 along the direction away from the first incident surface 410.

Specifically, the first light guide surface 422 uniformly approaches the second light guide surface 423 to form an inclined surface with a relatively large slope, so as to realize that the thickness of the first light guide portion 420 becomes thinner uniformly as it extends away from the first incident surface 410; thus, the entire light guide portion 42 is generally in the shape of a trapezoidal cylinder with a wide top and a narrow bottom. Similarly, the thickness of the second light guide portion 421 becomes thinner uniformly as it extends away from the second incident surface 411, that is to say, the thickness at the central position of the second light guide portion 421 is the thinnest. In this way, when the light emitted by the LEDs 30 enters the first light guide portion 420 from the first incident surface 410 and is reflected several times, the first light guide portion 420 can destroy the total reflection in the light guide portion 42 by using its own variation from thick to thin.

It should be noted that, because the light incident portion 41 is arranged in a ring shape, when the light emitted by the LEDs 30 enters the corresponding first light guide portion 420 and/or second light guide portion 421 from the first incident surface 410 and/or second incident surface 411, the light propagates more in the second light guide portion 421 than in the first light guide portion 420; therefore, in the present application, the inclination degree of the light guide surface at the bottom of the second light guide portion 421 is smaller than the inclination degree of the light guide surface (the first light guide surface 422) at the bottom of the first light guide portion 420, and such arrangement can ensure that the entire downlight 100 produces softer light while ensuring the light exiting rate.

Furthermore, the first incident surface 410 and the second incident surface 411 of the light incident portion 41 are both curved surfaces, and both curved surfaces protrude toward the LEDs 30, so that the light emitted by the LEDs 30 can enter the corresponding first light guide portion 420 and second light guide portion 421 through the first incident surface 410 and second incident surface 411. Such arrangement, under the condition of using a small number of LEDs 30, can not only ensure the light exiting rate, but also save materials, and improve the safety of circuit design and the reliability of the entire lamp.

With reference to FIG. 4, FIG. 5 and FIG. 6, a stepped microstructure 426 is arranged on the light exiting surface of the first light guide portion 420, and the stepped microstructure 426 is arranged around the light incident portion 41. The microstructure 426 is also arranged in a ring shape, and all of the microstructure 426 gathers towards the center of the light guide element 40. In this way, after the light enters the first light guide portion 420, it will undergo a series of light reflections and refractions. In order to avoid the phenomenon of total reflection, the thickness change of the first light guide portion 420 itself can be relied on to destroy the total reflection, and the microstructure 426 on the first light guide portion 420 can also be used to destroy the total reflection, so as to emit light. In this way, the light exiting rate of the entire downlight 100 is effectively improved, and the emitted light is softer and more natural. Of course, in other embodiments, light guide particles or other light destroying structures can also be used to destroy the total reflection, so as to emit light, and there is no limitation here.

Further, in order to improve the light exiting rate of the entire lamp, a recessed portion 43 is further arranged on the light exiting surface of the light guide element 40, the recessed portion 43 is located above the light incident portion 41 and is opposite to the light incident portion 41 in the same vertical direction, and the recessed portion 43 divides the light exiting surface of the light guide portion 42 into a first light exiting surface 424 and a second light exiting surface 425; that is, the first light exiting surface 424 is the light exiting surface of the first light guide portion 420, and the second light exiting surface 425 is the light exiting surface of the second light guide portion 41. The first light exiting surface 424 is located at the outer side of the second light guide surface 423, that is, the first light exiting surface 424 is the top outer wall surface of the first light guide portion 420, the second light guide surface 423 is the top inner wall surface of the first light guide portion 420, and the first light exiting surface 424 and the second light guide surface 423 are opposite to each other.

The second light exiting surface 425 is the top outer wall surface of the second light guide portion 421, and is located in the center of the light guide element 40 and arranged in a circular shape, the first light exiting surface 424 surrounds the second light exiting surface 425 and is arranged in a ring shape. Therefore, after the light enters from the first incident surface 410 and the second incident surface 411 respectively, it undergoes a series of reflections and refractions, and finally exits from the first light exiting surface 424 and the second light exiting surface 425 respectively. Because the second light exiting surface 425 is located in the center of the light guide element 40 and the light emitted from the first light exiting surface 424 is relatively concentrated, the second light exiting surface 425 is arranged to be slightly lower than the first light exiting surface 424 in the vertical direction; that is, the maximum thickness of a part of the second light guide portion 421 close to the light incident portion 41 is slightly less than the maximum thickness of a part of the first light guide portion 420 close to the light incident portion 41, the light incident portion 41 is located between the first light guide portion 420 and the second light guide portion 421, and the thickness of the light incident portion 41 is smaller in the middle region and larger on two edge region. Such arrangement can not only improve the light exiting rate of the entire lamp, but also ensure the natural and soft light.

With reference to FIGS. 1-8, the assembly and working principle of the downlight 100 of the present application will be described below. Firstly, the plurality of LEDs 30 are fixed on the light source plate 21 in a ring shape to form the light source assembly 20, and the light source assembly 20 is fixed to the bottom center of the lamp body 10. Then, the light guide element 40 is slid into the lamp body 10, and the buckle 46 is fixed in the clamping slot 12 on the inner side wall of the lamp body 10, at the same time, it is necessary to ensure that the LEDs 30 on the light source plate 21 is located at the central position below the opening of the light incident portion 41 of the light guide element 40; finally, the mask 50 is fixed into the lamp body 10, and the outer surface of the mask 50 is on the same horizontal plane as the protective edge 13 of the lamp body 10, thus completing the assembly of the downlight 100. Preferably, the cavity height of the downlight 100 in the present application, that is, the height between the upper surface of the light source plate 21 (the surface of the light source plate close to the light guide element 40) and the inner surface of the mask 50 (the surface of the mask close to the light guide element 40), is equal to about 8 mm. Such height setting, combined with the structural arrangement of the light guide element 40, can better ensure the high light exiting rate and soft light of the LEDs 30.

Working principle: the light emitted by the LEDs 30 enters the corresponding first light guide portion 420 and second light guide portion 421 from the first incident surface 410 and second incident surface 411, a part of the light will be reflected in the first light guide portion 420 and the second light guide portion 421, a small part of the light will be refracted out of the light guide portion 42 from the bottom surfaces of the first light guide portion 420 and the second light guide portion 421, and another part of the light will be refracted out from the light exiting surfaces of the first light guide portion 420 and the second light guide portion 421; and the light refracted from the light exiting surfaces will pass through the mask 50, and finally present soft and natural light with a high light exiting rate under the action of the mask 50.

In summary, the light incident surface A of the light guide element 40 of the present application, which is formed by recessing inward and is arranged as a curved surface, not only effectively increases the creepage distance of the light source 30, but also effectively improves the light exiting rate of the light source 30; according to the lamp 100 of the present application, the direct-lit arrangement of the light source assembly 20 and the light guide element 40, in cooperation with the inward recessed light incident portion 41 on the light guide element 40, enable the light guide element 40 to achieve side-emission of light, thereby not only realizing the ultra-thin shape of the lamp 100, but also improving the light exiting rate of the entire lamp and the natural softness of the light.

The above embodiments are only used to illustrate the technical solutions of the present application, but not restrictive. Although the present application has been described in detail with reference to the preferred embodiments, it should be understood by those skilled in the art that the technical solutions of the present application can be modified or replaced by equivalents without departing from the spirit and scope of the technical solutions of the present application.

## Claims

1. A light guide element, configured to guide light emitted by a light source, wherein the light guide element is provided with a light incident portion and a light guide portion, the light source is placed below the light incident portion, and a side of the light incident portion close to the light source is recessed to form a light incident surface, and the light incident surface is a curved surface; a light exiting surface is formed on the light guide portion, and the light guide portion is arranged beside the light incident portion and connected to the light incident surface, so that the light emitted by the light source enters the light guide portion after passing through the light incident surface and propagates in the light guide portion, and the light in the light guide portion is emitted through the light exiting surface in a propagation path of the light.

2. The light guide element according to claim 1, wherein the light incident surface comprises a first incident surface and a second incident surface, the light guide portion comprises a first light guide portion and a second light guide portion located at two sides of the light incident portion, the first light guide portion is connected to the first incident surface, the second light guide portion is connected to the second incident surface, and a thickness of the first light guide portion and/or a thickness of the second light guide portion gradually decreases along a direction away from the light incident portion.

3. The light guide element according to claim 2, wherein a maximum thickness of a part of the second light guide portion close to the light incident portion is less than a maximum thickness of a part of the first light guide portion close to the light incident portion; the light incident portion is between the first light guide portion and the second light guide portion, and a thickness of the light incident portion is smaller in a middle region thereof and larger on both edge regions thereof.

4. The light guide element according to claim 3, wherein the thickness of the first light guide portion and the thickness of the second light guide portion are both in a range of 0.6mm-4mm.

5. The light guide element according to claim 2, wherein the first light guide portion comprises a first light guide surface close to the light source and a second light guide surface opposite to the first light guide surface, the second light guide surface is parallel to a horizontal plane, and the first light guide surface gradually inclines upward from the first incident surface along a direction away from the first incident surface.

6. The light guide element according to claim 2, wherein the light guide element is arranged in a ring shape, the light incident portion surrounds the second light guide portion, the first light guide portion surrounds the light incident portion, and a light destroying structure is arranged on the light exiting surface of the first light guide portion to destroy total reflection of light in the first light guide portion.

7. The light guide element according to claim 6, wherein the light destroying structure comprises a stepped microstructure.

8. The light guide element according to claim 2, wherein a curved surface of the first incident surface and/or a curved surface of the second incident surface both protrude towards the light source.

9. A lamp, comprising a lamp body, a light source assembly, a light guide element and a mask which are assembled and matched with each other, wherein a lamp cavity is formed in the lamp body, and the light source assembly is fixed in the lamp cavity, wherein the light guide element is the light guide element according to any one of claims 1-8.

10. The lamp according to claim 9, wherein a positioning portion protrudes from an edge of the light guide element, a matching portion matched with the positioning portion is arranged on an inner side wall of the lamp body; and the light guide element is fixed in the lamp cavity through mutual matching of the positioning portion and the matching portion.

11. The lamp according to claim 10, wherein the positioning portion is a buckle protruding outward from the edge of the light guide element, the matching portion is a clamping slot recessed on the inner side wall of the lamp body, the buckle is accommodated in the clamping slot to fix the light guide element in the lamp body.

12. The lamp according to claim 9, wherein the light source assembly comprises a light source plate and lamp beads fixed on the light source plate, a surface of the light source plate close to the light guide element is sprayed with ink, and the lamp beads are uniformly distributed on the light source plate and located at a central position below the light incident portion of the light guide element.

13. The lamp according to claim 9, wherein the lamp is a downlight; the lamp body, the light source assembly, the light guide element and the mask are all arranged in a circular shape, and the mask covers an outer side of the light guide element and is fixedly connected to the lamp body to seal the lamp cavity.
